# EUROPEAN PATENT APPLICATION

(11) **EP 4 191 051 A1**
(43) Date of publication of application: **07.06.2023**
(21) Application number: 22211468.8
(22) Date of filing: 05.12.2022
(51) Int. Cl.: F03B 13/20

(54) **WAVE ENERGY CONVERSION DEVICE**

(30) Priority: 06.12.2021 IE S20210205
(71) Applicant: Oscillating Wave Energy Limited, County Cork T12 YR24 (IE)
(72) Inventor: LAKOS, ISTVAN, County Cork, T12 YR24 (IE); BALOGH, BELA, County Cork, P25 D620 (IE)
(74) Representative: MacLachlan & Donaldson

(57) **Abstract**

A device for harnessing and augmenting kinetic wave energy and converting said kinetic wave energy into electrical energy comprising:
a mass; a primary cable;
a gas filled buoyancy unit;
a secondary cable; and
a converter for converting kinetic energy translated from wave motion into electrical energy,
wherein, in use, the mass and the buoyancy unit are connected to each other in tension within a water column via the primary cable, and the buoyancy unit and the converter are connected to each other in tension via the secondary cable, such that fluctuations of waves cause movement of a vessel, thus varying the tension in the secondary cable causing a retraction and extension motion within the converter which is then converted into electrical energy.

## Description

This invention relates to a device and method for harnessing kinetic wave energy, in particular a device and method which amplifies kinetic wave energy and enables its conversion into electricity.

### Background to the Invention

Electrical energy is a fundamental part of modern life. A vast amount of energy is used globally every day in order to support the global population and the variety of lifestyles the world population encompasses. As population and general utilisation increase, energy demands also increase. Traditionally a large proportion of the energy harnessed for human consumption has been produced by fossil fuel sources (such as coal, oil and gas). These resources are however finite and large global increases in energy consumption, paired with more advanced understanding of long-term effects of the depletion of fossil fuels, has highlighted the need to find alternative sources of energy.

Renewable sources of energy such as solar energy, tidal energy, nuclear energy and hydroelectric energy are known. However, each of these sources also has its own disadvantages. For example, solar energy may not be consistently available in all locations throughout the day or even throughout the year. Its variable nature makes solar energy less dependable than other energy sources and in addition, photovoltaic cells or similar, require a large installation area of complex technology in order to be efficient. Similarly, tidal energy is location specific, requires large offshore installations and infrastructure in order to transport the energy to locations for use. Nuclear energy requires a large investment in complex infrastructure and may produce harmful by-products.

It is therefore the object of the present invention to advance methods and devices that capture, harness and convert wave energy for distribution in order to provide an efficient and clean means of producing energy, or at least provide a suitable alternative thereto.

### Summary of the Invention

According to a first aspect of the invention there is provided a device for harnessing kinetic wave energy and converting said kinetic wave energy into electrical energy, the device comprising:
a mass;
a primary cable;
a gas filled buoyancy unit;
a secondary cable; and
a converter comprising a means for connection to a vessel, for converting kinetic energy translated from wave motion into electrical energy,
wherein, in use, the mass and the buoyancy unit are connected to each other in tension within a water column via the primary cable, and the buoyancy unit and the converter are connected to each other in tension via the secondary cable; and the converter is connected to a vessel, such that,
fluctuations in waves cause movement of the vessel to which the converter is connected, thus varying the tension on the secondary cable and causing a retraction and extension motion within the converter which is then converted into electrical energy.

Preferably, the converter comprises a flywheel.

Preferably, the converter comprises a hydraulic arm.

Preferably, the secondary cable comprises a pulley mechanism.

Preferably, the gas filled buoyancy unit comprises elastic sidewalls.

Preferably, the device comprises a plurality of masses.

Preferably, the device comprises a plurality of buoyancy units.

Preferably, the buoyancy unit and the mass are integrated together into a single unit.

Preferably, the device comprises a vessel.

Preferably a farm is provided comprising a plurality of devices wherein the devices are interconnected.

Preferably, there is provided a method of harnessing kinetic wave energy from a particular location with the device and converting said kinetic wave energy into electrical energy, the method comprising the following steps:
i. assessing the wave environment of the location in order to predict wave types and wave heights;
ii. based on the predicted wave environment configuring device with a mass of suitable value, buoyancy unit of suitable volume, primary cable of suitable length and secondary cable of suitable length;
iii. connecting the device to a mooring point such that the device is fixed in the location; and
iv. connecting the converter to a generator, battery or other means of distributing the electrical energy.

Preferably a generator is connected to flywheel in order to generate electricity from the harnessed kinetic energy.

Preferably a processor is provided to control the working parameters of the generator for various different wave conditions.

Preferably motion sensors are provided in order to monitor the movement of the waves.

Preferably, sensors are provided to monitor the velocity of the components of device

Preferably, sensors are provided to monitor the energy generated by the device.

Preferably, a three axis accelerometer is provided.

Preferably, the mass and buoyancy unit are both hydrodynamically streamlined in order to ensure minimal resistance as they move through the water, thus optimising the amount of energy which can be extracted from the waves.

Preferably, the mass and buoyancy unit are both produced from recycled material. Preferably, the motion of the buoyancy unit causes the gas within the buoyancy unit to expand and contract due to the depth of the buoyancy unit within the body of water, thus augmenting the kinetic energy harnessed by the device.

### Brief Description of the drawings

Certain preferred embodiments of the present invention will now be described, by way of example only, with reference to the accompanying drawings in which:
Figure 1 illustrates a simplified schematic view of a preferred embodiment of a device according to the present invention, wherein the device is attached to a flywheel;
Figure 2 illustrates a schematic view of the device of Figure 1, in use, wherein a buoyancy unit is advancing toward the surface of the water thus allowing the flywheel to be reeled in;
Figure 3 illustrates a schematic view of the device of Figure 1, in use, wherein a buoyancy unit is receding away from the surface of the water thus allowing the flywheel to be reeled out;
Figure 4 illustrates a plurality of the devices of Figure 1, located on a plurality of vessels which are joined together to form a wave energy conversion farm;
Figure 5 illustrates an alternative preferred embodiment of a device according to the invention where a plurality of buoyancy units are connected to a plurality of mass units through a plurality of primary cables and wherein a plurality of secondary cables connects the combined systems of masses and buoyancy units to a plurality of hydraulic arm extensions which are located on a vessel comprising a rounded undercarriage;
Figure 6 illustrates the alternative preferred embodiment of Figure 5 wherein the vessel comprises a v shaped bow with a round displacement undercarriage and a plurality of arms, wherein a device is suspended from each arm; and
Figure 7 illustrates the alternative preferred embodiment of Figure 6 wherein the plurality of arms are further divided such that several devices are be suspended from each arm.

### Detailed Description

Various embodiments of the present invention will be described in detail with reference to the drawings, where like reference numerals represent like parts and assemblies throughout the several views.

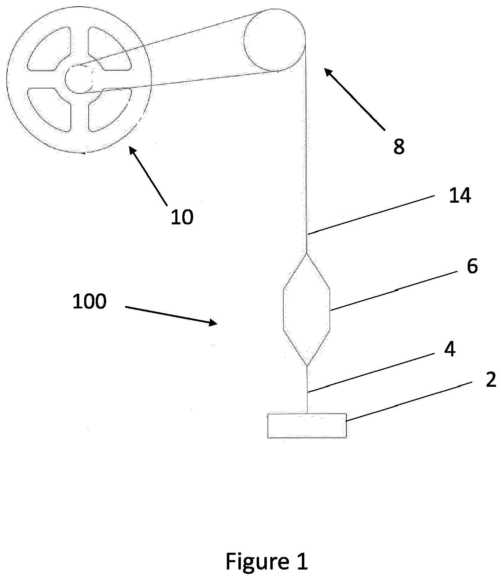

Referring now to Figures 1 - 3 of the accompanying drawings, there is illustrated a first embodiment of a wave energy converter device, generally indicated as 100, attached to a converter 10 in the form of a flywheel. Device 100 is designed to easily and efficiently capture the energy of oscillating waves (for example capillary waves or gravity surface waves), amplify the energy and distribute the energy into a suitable energy conversion means in order to convert the energy into electrical energy or store the energy. Due to the highly adaptable nature of the device 100, the device 100 is suitable for a wide variety of sea and lake applications ranging from close to shore locations to deeper water. The device 100 can be employed to capture energy from a wide variety of waves of different wave heights, including capillary waves (rolling motion), chop and gravity surface waves.

Figure 1 illustrates a simplified schematic view of a preferred embodiment of a device 100 according to the present invention, wherein the device 100 is attached to a flywheel 10 such that the flywheel 10 converts the kinetic energy of the wave as harnessed by the device 100 into an energy form that can be stored or input into a component for use

As illustrated in Figure 1, in its simplest form, device 100 comprises mass 2, primary cable 4, secondary cable 14, buoyancy unit 6 and converter 10, wherein primary cable 4 and secondary cable 14 are each elongated lengths of high tensile strength materials (such as for example stainless steel wire or polypropylene rope). The term cable will not be construed as limiting and the features referred to as primary cable 4 and secondary cable 14 may alternatively be wire or a rope provided that they are of suitable tensile strength. It is important that the primary cable 4 and the secondary cable 14 each independently exhibit minimal to no elasticity, in order for all the energy of the waves to be captured by the device 100.

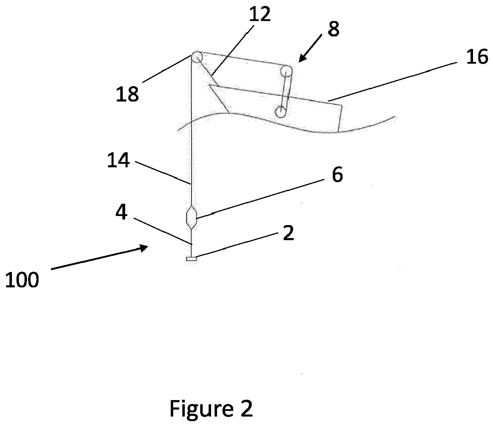

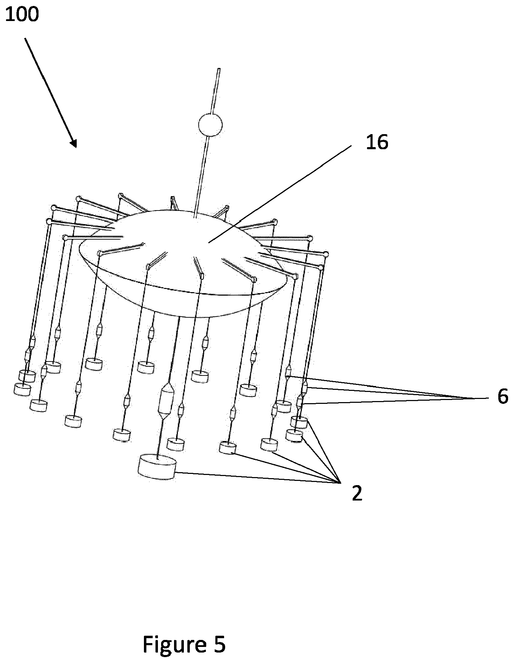

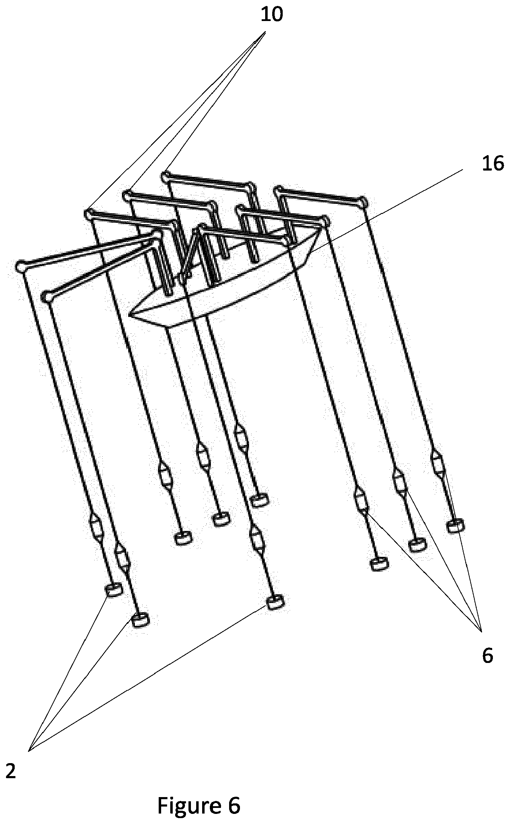

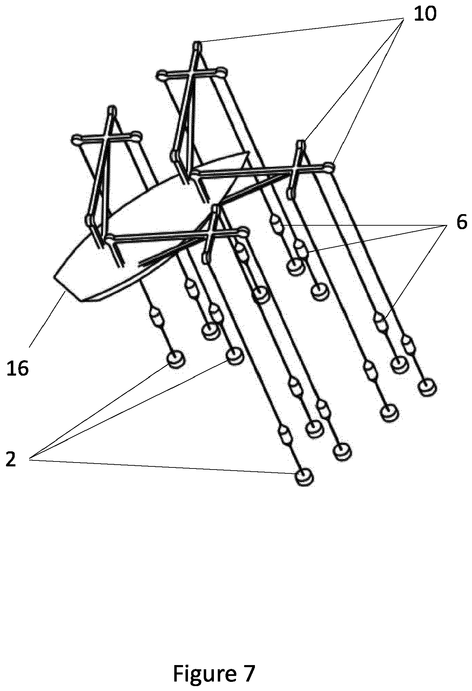

In use, device 100 is located at an intermediate submerged depth below the surface of the body of water. In this context, body of water will be understood to mean a lake or sea. The device is connected to a vessel 16 (not shown in Figure 1). The vessel 16 may be a floating buoy, a platform, a ship or other type of floating body. The device 100 may be integrally connected to the vessel 16 or the vessel 16 may be provided separate to the device 100. As the vessel 16 is affected by waves, the vessel 16 may pitch, heave roll, yaw, sway or surge. The vessel 16 which is shown in Figure 2 - 7 pitches and rolls, putting tension on the cables 4, 14 and lifting then dropping the buoyancy unit 6 and the mass 2. As vessel 16 lifts towards the crest of the wave, the lifting motion creates tension on the secondary 14 and thus the buoyancy unit 6 and the mass 2. As the vessel 16 sinks towards the trough of the wave, this tension is released and the secondary cable 14 can now be reeled out from the converter 10 (shown as a flywheel). The converter 10 could equally be a hydraulic arm or an energy conversion system such as a generator. In the embodiment shown in the Figures 1- 3, flywheel 10 retracts secondary cable 14 and rotates (alternatively, in the case of a hydraulic arm as shown in Figure 5-7, the arm retracts as the tension reduces due to the motion of the vessel 16. As the vessel 16 moves from side to side (roll and pitch) a similar process takes place. Figure 6 illustrates an embodiment wherein the vessel 16 comprises a plurality of arms 12 and wherein a device 100 is suspended from each arm. Figure 7 comprises a further addition wherein the arms 12 are further divided such that several devices 100 can be suspended from each arm 12. The orientation of the arms 12 is important as an angle of 45° to the centreline of the vessel enables the device 100 to benefit from both pitch and heave motions, thus providing optimal efficiency. The arms 12 may additionally comprises vertical extensions. Such a vertical extension increases the height of the centre of gravity of the vessel 16. An increased centre of gravity of the vessel 16 means that the vessel 16 will be more effected by the motion of the waves and thus rolling motions of the waves will be magnified. The arms 12 could also be adjustable such that different orientations can be chosen depending on the environmental conditions. As the waves move away from vessel 16, the device 100 falls into the trough of the wave and is drawn back down into the body of the water. The weight of mass 2 pulls buoyancy unit 6 vertically down through the water due to gravity and partial loss of tethering tension. As device 100 moves down, secondary cable 14 is pulled out of converter 10 (which may be a flywheel) and the flywheel rotates (or in the case of the hydraulic arm, the hydraulic arm extends as the tensile force on the hydraulic arm increases) thus activating a rotor (not shown in the Figures). The extension and retraction of secondary cable 14 thus generates energy which is captured and converted into useable electrical energy. The extension and retraction of secondary cable 14 is repeated continuously in a cyclic manner. Flywheel 10 smooths out the power distribution so that the energy can be distributed into a generator or storage means (not shown) for further use. Any power generating means which requires rotation, gyration or motion to generate electricity may be used in conjunction with device 100. The energy harnessed by the device 100 can be distributed or transmitted to any conventional method of electrical energy distribution or it can alternatively be stored by means of a battery or used in the process of electrolysis.

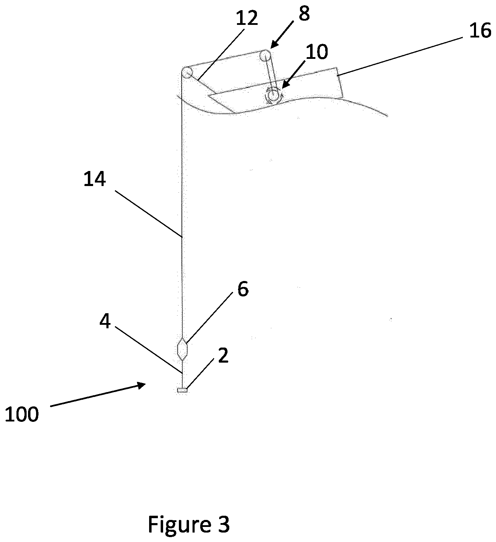

As shown in Figures 2 and 3, roller system or a pulley system 8 is located on the vessel 16 which houses the converter 10. Roller 18 supports the passage of secondary cable 14 into the converter 10. Pulley system 8 is required if a large amount of kinetic energy is being harnessed by the device 100. One or more gearboxes (not shown) may be required in order to provide different torque settings for different wave heights and frequencies.

Buoyancy unit 6 is a unit which is filled with gas, preferably air. Buoyancy unit 6 may comprise a rigid body, however, buoyancy unit 6 is preferably a standard air bag comprising soft or elastic walls such that the exact form of buoyancy unit 6 is not rigid. As buoyancy unit 6 is a sealed unit which is filled with gas, further ingress or egress of gas within buoyancy unit 6 is not required. Buoyancy unit 6 augments the effect of the captured waves as it moves up and down through the body of the water in response to the changes in water pressure due to the distance travelled.

In an alternative embodiment not shown in the Figures, the mass 2 and the buoyancy unit 6 are integrated into a single body such that the effect of drag is reduced on the device 100.

Buoyancy unit 6 augments the effect of the captured waves as it moves up and down through the body of water in response to the motion of the waves which act on the vessel 16. As buoyancy unit 6 moves up through the body of water towards the surface of the water, the gas (for example oxygen) therein expands due to the pressure differential it experiences as buoyancy unit 6 moves vertically through the body of water. As the gas expands, it increases the buoyancy of buoyancy unit 6, thus further aiding buoyancy unit 6 in moving towards the surface of the body of water and creating more energy, than that of a buoyancy unit with rigid walls. This process also works in reverse as buoyancy unit 6 sinks down through the body of water - the gas within buoyancy unit 6 contracts thus aiding buoyancy unit 6 on its downward passage. Thus, buoyancy unit 6 extends the amount of travel/speed of travel through the water depth thus creating more energy than that of a buoyancy unit 6 with a vented system.

Mass 2 is a high-density material such as iron, although it will be appreciated that the mass 2 is not limited solely to iron and other materials are also considered within the scope of the invention. Use of a high-density material ensures that bulk capacity is reduced and mass 2 can be as streamlined as possible, thus reducing the overall footprint of the device 100.

Buoyancy unit 6 is preferably made of a recycled polymer, such as rPet plastics or fibreglass, although it will be appreciated that buoyancy unit 6 is not limited solely to these materials and other materials are also considered within the scope of the invention. In the embodiment shown in the Figures 6, the vessel 16 is a round displacement vessel 16 with a V shaped bow, although other shapes of vessel 16 are possible as shown in Figure 5 which illustrates a rounded undercarriage. The bow is also not limited to a v shape. The round shape of vessel 16 and its v shaped bow is efficient in creating maximum motion of buoyancy unit 6 from both the side rocking motion of small waves and also the pitch and sway motion of larger waves from the front.

Mass 2 is tethered from buoyancy unit 6 by primary cable 4 in a pre-defined configuration based on the physical environment in which device 100 is situated. Buoyancy unit 6 is additionally connected to secondary cable 14, the length of which is determined by the anticipated wave height of the surrounding body of water.

Primary cable 4 and secondary cable 14 may be composed of the same material, or they may be composed of different material. Mass 2 may be distributed into a plurality of mass units. Buoyancy unit 6 may be distributed into a plurality of buoyancy units.

In the embodiment shown in the Figures 1 - 3, secondary cable 14 is connected to a converter 10 (for example a flywheel), wherein the fluctuations of the kinetic energy are averaged out prior to transforming the captured energy into a means of storing, transporting or consuming the energy. As previously noted, rather than flywheel 10, secondary cable 14 may be connected directly to a hydraulic arm as shown in Figures 5 - 6, wherein the hydraulic arm contains pressurized fluid and wave fluctuations result in the hydraulic arm extending and retracting in response to the tensile force exerted by the combined system of buoyancy unit 6, mass 2, primary cable 4 and secondary cable 14 on the vessel 16.

An example of the relative sizes and configuration is now described for exemplary purposes. It will be understood that the invention is not limited to the example and the example is simply provided as an indication of a potential configuration.

In an exemplary configuration, 16 - 20 mass units may be connected to a large vessel 16. The vessel 16 comprises a rounded undercarriage. The preferred diameter of the vessel 16 is 6 - 7 metre (21ft to 24ft) as this diameter is suitable to capture at least some of the movement of close to shore waves, in estuaries or larger lakes. Larger vessels 16 with larger mass 2 and buoyancy 6 may be required in open sea and ocean conditions. In a preferred embodiment it is anticipated that the total mass (net mass) of the device 100 should be approximately twice the weight of the flywheel core (or the pressure resistance of the hydraulic arm) and the mass 2 to be offset by the buoyancy unit 6 should be approximately 4 - 5 times the total mass 2 (net mass). The mass 2 is secured to the buoyancy unit 6 such that it sits in the water with a distance to the surface of the water being calculated at a specific ratio with the wave height, for example a ratio of 5:1 wherein a minimum of 10m of depth of the mass 2 is required for a wave height of 2m. Adherence to such a ratio will ensure that interference between the surface wave and the motion of the device 100 beneath the waves can be avoided. Similarly, adherence to a general rule of thumb with regard to the gross weight of the mass 2 and the capacity of the buoyancy unit 6 wherein the buoyancy unit 6 reduces the gross weight of the mass 2 by 60% - 80% in accordance with Archimedes formula FB=Vρg (wherein V is the volume of the object, ρ is the density and g is the gravitational acceleration) ensures that the device 100 is balanced at a submerged depth in accordance with the waves acting upon it.

Thus, for exemplary purposes, the respective values of two scenarios which would result in approximately 20kW at peak conditions (15m/s wind speed and above) and 12kW at average conditions (6m/s wind speed and above) are outlined as follows:
5kg flywheel with a device net mass of 10kg (actual mass of 40kg plus 30kg buoyancy)
10kg flywheel with a device net mass of 20kg (actual mass of 80kg plus 60kg buoyancy)

However, as wave conditions vary from one location to another and one weather condition to another, other diameters and other undercarriage shapes of the vessel 16 are also included in the scope of this invention.

For example, larger ocean waves and swell (long unbroken waves) have a long wavelength so the potential dampening effect of the long flat crest of these waves on the vessel 16 and thus the device 100 can be avoided by providing a vessel 16 which has a diameter which is greater than the flat crest of the wave. The device 100 is thus particularly suited to shore waves as long ocean swells tend to break up as they near the shore and thus produce waves of increased wave height.

As current conditions can create surface waves on top of swells, the invention is bound by wind conditions rather than limited to specific wave heights. Historic data on both wave heights and wind conditions can be used to analyse the best locations to place the device 100 for use.

Buoyancy unit 6 is also connected to the converter 10, through means of secondary cable 14, such that variations in the depth below the surface of the water of buoyancy unit 6 are absorbed as kinetic energy by converter 10 and can thereafter be transformed into another type of energy or stored through an energy storage means.

It is necessary for device 100 to be connected to a mooring / anchoring point in order to prevent device 100 from floating freely in the water. The converter 10 is connectable to, or part of, a vessel 16. The mooring / anchoring point may be fixed or temporary. Preferably, an anchoring point is provided within the body of water (for example on the sea floor) and a surface unit 22 (for example a floating buoy) is connectable to the device 100 or the vessel 16. Most preferably the surface unit 22 is connected to the vessel 16 and the vessel 16 is connected to the converter 10. The vessel 16 may be temporarily or permanently attached to said surface unit 22 or anchor. Horizontal attachment to the mooring point, rather than a vertical attachment to an anchor, ensures that vertical movement of the vessel 16, and thus the device 100, is not dampened through direct contact with the anchor. In addition, horizontal attachment allows vessel 16 to turn in response to the wind and to take up any position about the mooring point.

Arm 12 extensions may be utilised such that the arm 12 extends beyond the vessel 16 such that the device 100 can be positioned directly beneath the extended end of the arm 12. The arm 12 may extend horizontally from the vessel 16, or it may extend both vertically and horizontally in order to lengthen the passage of the secondary cable 14. Vertical extension of the arm 12 may increase the height of the centre of gravity of the vessel 16.

As the size and capacity of device 100 can be scaled up or down, device 100 has many different applications. Device 100 offers a cost effective and low maintenance solution thus making it attractive in a wide variety of different fields. As waves are always present and device 100 is suitable for a wide range of waves, device 100 is harnessing a renewable energy source which is continuously available. The compact footprint and lack of by-products created by device 100 in use means that device 100 is a clean energy source. The proximity of waves to large cities and other energy consuming applications means that the source of the energy can be located in the locality of the consumption of the energy, thus creating further efficiencies in terms of avoiding storage and transportation of energy.

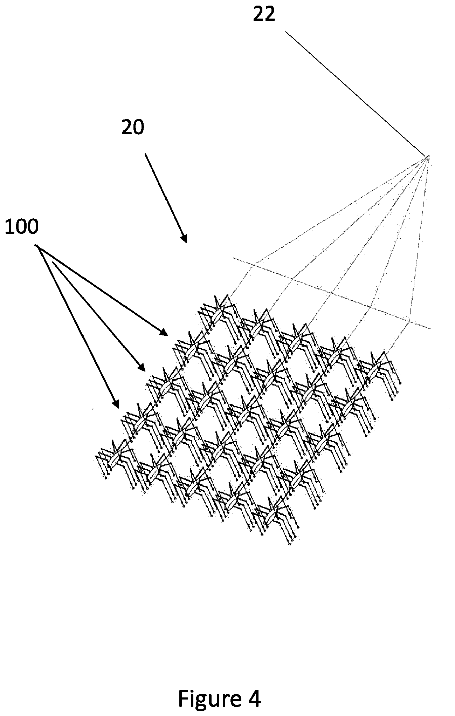

Device 100 can be used as a single device which is suitable to be connected to a vessel 16 in order to supply power to platforms or onshore applications or it could be used as a power generator for sailing vessels, electric vessel and powerboats. As shown in Figure 4, in order to optimise the efficiency of device 100, a plurality of devices 100, along with a plurality of vessels 16, are cooperatively connected to form a wave energy conversion farm 20. This farm 20 could be located close to shore where wind conditions are usually mild to moderate and its proximity to the shore may also mean that the energy generated has less distance to travel in order to be consumed so a less complicated infrastructure may be needed to distribute the energy, rather than that of traditional energy distribution grids.

It is to be understood that the invention is not limited to the specific details described herein which are given by way of example only and that various modifications and alterations are possible without departing from the scope of the invention as defined in the appended claims.

## Claims

1. A device (100) for harnessing kinetic wave energy and converting said kinetic wave energy into electrical energy, the device (100) comprising:
a mass (2);
a primary cable (4);
a gas filled buoyancy unit (6);
a secondary cable (14); and
a converter (10) comprising a means for connection to a vessel (16), for converting kinetic energy translated from wave motion into electrical energy;
wherein, in use, the mass (2) and the buoyancy unit (6) are connected to each other in tension within a water column via the primary cable (4);
the buoyancy unit (6) and the converter (10) are connected to each other in tension via the secondary cable (14); and
the converter (10) is connected to a vessel (16);
such that,
fluctuations of waves cause movement of the vessel (16) to which the converter (10) is connected, thus varying the tension in the secondary cable (14) and causing a retraction and extension motion within the converter (10) which is then converted into electrical energy.

2. The device (100) of claim 1, wherein the converter (10) comprises a flywheel.

3. The device (100) of claim 1, wherein the converter (10) comprises a hydraulic arm.

4. The device (100) of any preceding claim, wherein the secondary cable (14) comprises a pulley mechanism.

5. The device (100) of any preceding claim, wherein the gas filled buoyancy unit (6) comprises elastic sidewalls.

6. The device (100) of any preceding claim, comprising a plurality of masses (2).

7. The device (100) of any preceding claim, comprising a plurality of buoyancy units (6).

8. The device (100) of any preceding claim, wherein the buoyancy unit (6) and the mass (2) are integrated together into a single unit.

9. The device (100) of any preceding claim, comprising a means of attaching the device (100) to a vessel (16).

10. The device (100) of any preceding claim 1 to 8, wherein the device (100) comprises a vessel (16).

11. A farm (10) comprising a plurality of devices (100) according to any one of the preceding claims, wherein the devices (100) are interconnected.

12. A method of harnessing kinetic wave energy from a particular location and converting said kinetic wave energy into electrical energy using the device (100) of any one of the preceding claims, the method comprising the following steps:
i. assessing the wave environment of the location in order to predict wave types, wave heights and a suitable vessel (16);
ii. based on the predicted wave environment configuring the mass (2) of suitable value, buoyancy unit (6) of suitable volume, primary cable (4) of suitable length and secondary cable (14) of suitable length;
iii. connecting the device (100) to vessel (16);
iv. connecting the vessel (16) to a mooring point such that the device (100) is fixed in the location; and
v. connecting the converter (10) to a generator, battery or other means of distributing the electrical energy.
